# EUROPEAN PATENT APPLICATION

(11) **EP 2 383 683 A1**
(43) Date of publication of application: **02.11.2011**
(21) Application number: 10290230.1
(22) Date of filing: 30.04.2010
(51) Int. Cl.: G06N 3/00, G06Q 10/00

(54) **Method for improving inter-worlds immersion through social interactions analysis and transparent communication services**

(71) Applicant: Alcatel Lucent, 75008 Paris (FR)
(72) Inventor: Saidi, Adel, Mohamed, 91620 Nozay (FR); Hebbar, Abdelkrim, 91620 Nozay (FR); Hacid, Hakim, 91620 Nozay (FR)
(74) Representative: Shamsaei Far, Hassan

(57) **Abstract**

A method of generalizing the users communication means in a virtual world between users, comprises the steps of:
- combining said communication means with social features for automatic selection
- combining said communication means with communications hyperlinks in order to preserve users' identity and keep an ambient identity between the virtual and the real world.

## Description

Virtual Worlds (VWs) are computer-simulated environments where the computer presents perceptual stimuli to the user who interacts and manipulates the different elements of that simulated environment. VWs join the increasing important topic related to computer games and video environments proliferation. This area is attracting more and more researchers even outside the classical area of computer vision, e.g., databases where there are attempts to leverage databases technologies in this domain. This increasing interest is also justified by the huge commercial interest of those environments.

User can have more than one active avatar, and he may want to communicate with other members who could belong to his community. Furthermore the virtual world is considered as a communication platform on which the user may communicate with his community.

Users want to go further in feeling virtual worlds more realistic by merging real world and VWs through communication reinforcement. Many attempts exist for adding communications into VWs but they are still limited to improving the communication only inside a specific VW.

Many attempts exist for adding communications into VWs but they are still limited to improving the communication only inside a specific VW. We introduce a new communication paradigm for improving the intra-world (i.e., VW) and inter-worlds (VWs towards VWs or VWs towards Real world) communications.

From the communication perspective, the goal is to introduce communications means inside these virtual worlds and make a bridge between these worlds and the real world.

The advent of voice as a mean of communication in virtual worlds has widely replaces the typed text messaging.

Several studies have highlighted the benefits that voice communication could bring to different virtual worlds in term of social experience.

Through an "Immersive Communication Environment" experience in online games, has demonstrated how geographic-proximity voice communication created some advantage for players in terms of their game play and their experience of the game as a social event. Online collaborative e-learning virtual worlds rely heavily on voice communication facilities.

However, some other studies has highlighted problems with existing implementations of voice-over-IP in online games and suggested the need to carefully design voice communication systems.

In fact, even if VoIP facilities adaption in virtual worlds has been widely adopted, specifically in first-person shooter and massive multi-player games, the usability and sociability of VoIP was situation-dependent. Except one-to-one communication, using VoIP in multi-player games for n-n communication can often make it hard to know who is talking.

In fact, some massive multi-player games provide voice communication facilities as "virtual two-way radios". Wadley et al. show that VoIP works best when used by a small group of players who knew each other prior (either in virtual or real worlds).

Stressed that all those effort aim to bring the gap between virtual and real worlds which still needs many contributions as we're bringing.

Currently the only adopted solution is a communication service based on the Instant Messaging tools (IM), moreover there are proprietary solutions based on the framework on which they are deployed.

Among the added communication capabilities in second life the AvaLine, a service that enables Second Life residents to receive voice calls in-world from an outside number, be it mobile, land and or VOIP.

These existing solutions are not good enough since it supports only audio media type, can receive only inbound calling service, and reveals the identity of the inworld resident.

A main idea of the invention is to create a new communication component to be able to connect people from different environment, i.e., virtual or real environments. In other words, the user is offered the possibility to declare any virtual object as a communication object which may be activated through a touch and which is able to launch a communication between the virtual avatar and the user who declared the communication object no matter if the user is connected to the virtual world or not.

Further developments of the invention can be gathered from the following description.

In the following the invention will be explained further making reference to the attached drawing: *Figure unique: Architecture of the proposed invention.*

If a user creates her virtual profile or object, she gives it social and communication capabilities.

By adding a communication hyper-link in her profile, user's avatar is displayed with a visual flag indicating to all the members of her community that she can be contacted.

Another way to be joined, the inworld resident creates her own communicating object with a texture screen through it, so that any resident can contact her whenever the real user is not logged in.

Basically to start a communication session, the caller should use the clickable virtual object and the session will be established with the owner of the object. The callee in the real world will receive a media stream representing the capture of the avatar face and its scene with a 3D media sound; the caller will receive the audio and the video of the real person captured by the microphone and the camera of her terminal.

The notion of "communicability" is introduced as a tuple C=<SC, CT> where SC defines the social closeness between two persons/avatars and CT a communication means among the following five: Email, Recorded message, Instant Message, Live Audio, and Live Media. Table 1 summarizes a possible correspondence between the computed social closeness and the communication type a user may launch with/through and avatar.

**Table 1: Summary of (possible) correspondences between the social closeness and communication means.**

| **Social Closeness** | **Communication Type** |
|---|---|
| < 0.1 | Email |
| >= 0.1 & < 0.3 | Recorded Message |
| >=0.3 & < 0.6 | Instant Message |
| >= 0.6 & <0.9 | Live Audio |
| >=0.9 | Live Media (Audio + Video) |

The modalities are defined according to a social proximity. More the social proximity is greater; more the used communication type is enriched. Moreover, higher the social proximity is, more important is the choice in terms of communication options.

Correspondences between the communication means and the social proximity are built to react to the user social closeness. The created hyperlink can be associated to a virtual object. When a socially close person is detected/launches the communication, the hyperlink changes its modality automatically (e.g., from text to media type).

In addition to this automatic changing of the communication modality, users are offered a way to manually change the modality.

The solution we are proposing aims then at providing inter-worlds transparent communications capabilities and their adaptation according to social interaction analysis strategies (mainly social proximity computation).

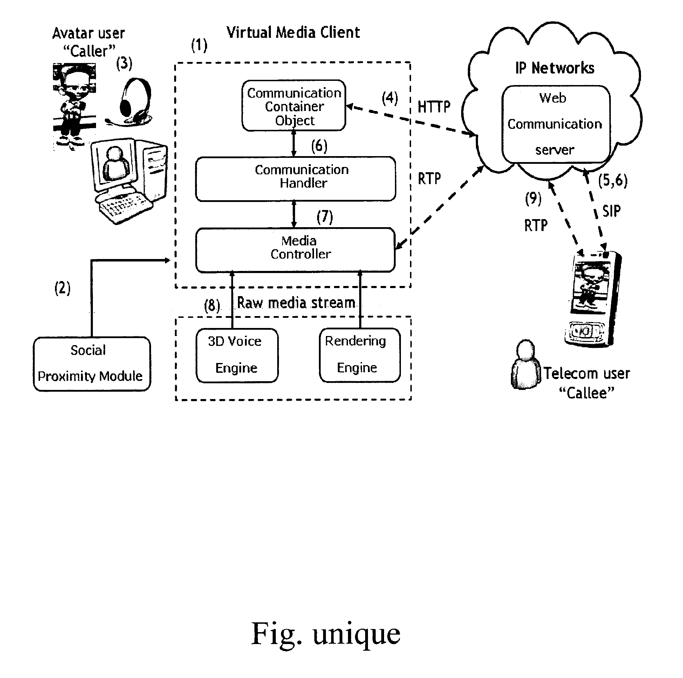

In the following, we propose architecture to materialize our solution describing the different components which may be involved to realize this architecture. Figure 1 depicts the different components of the solution.

The most important, and innovative, components in the architecture are: (i) the virtual media client, and (ii) the social module, and (iii) the Web communication server.

The virtual media client encapsulates several components responsible of establishing communications between two parts.

Generally speaking, this module has a very sensitive role since it prevents VWs users to install specific programs to communicate with other parties. Thus, it offers all the communication resources needed to establish such communications.

Depending on the architecture of the virtual world, this module can be located either of the central server (centralized architecture) or on the coordinating server, dispatched on the different peers (in a decentralized architecture).

This module is composed of three components:
- *Communication Container Object (CCO)*: is downloaded from the web server, to the Virtual World where is located the caller. The CCO contains the IP address, the ports number, and information about the type of communication to be supported and the identification of the media server which is in charge of connecting the media stream between the virtual client and the real client.
- *Communication Handler.* Is a component responsible of offering a web call back service, it is in charge of negotiating the connection between the caller and the callee.
- *Media controller:* It opens an RTP connection with the web media server, and starts capturing the video frames produced by the virtual rendering engine and the 3D voice engine, and then it starts building the RTP outgoing stream by adding the appropriate header to each frame (based on used codec e.g. H263 or H264). Finally the data stream is sent through the RTP transport channels (Audio/Video).

The described module enables then the establishment of a communication between the two parts on a specific media channel (e.g., email, voice, etc.) no matter if the participants are in the same environment or not. As noticed before, the communication mean can be different according to the social relation the participants may share.

The social module is responsible for managing this part of the invention and the adaptation of a communication channel through the computation of a social proximity. Finally, the last module is the Web communication server which has a role of sending call requests to real world.

After the description of the main modules of the architecture translating the heart of this innovation, we describe in the following the overall process and the interactions between the different components of the architecture. We illustrate this through two users: U1 who is connected to a given virtual world and U2 who has declared a communication object in her VW and is not connected to that environment. U1 decides to launch a communication with U2 through the declared communication object.
- In the virtual world, the user starts by creating a virtual wall to be used as a communication display to be used by someone else (Step (1) on the Figure).
- The Social Proximity Module checks the social closeness of the object owner with the other avatars' owners present in the virtual location. Based on this information, the virtual object is set to enable or disable status. By using the communication hyperlink a dynamic mashup is built to change the modality of the communication (e.g. Text, Audio or Video) that can be configured depending on the degree of social proximity found between the caller and the callee (Step (2) on the Figure).
- Once a virtual user logged in the virtual world, i.e the caller, clicks on the communication object (e.g. telephone object), a call request is sent to the Web Communication Server (WBS) (Step (3) on the Figure).
- A Communication Container Object (CCO) is downloaded from the web server, to the Virtual World where is located the caller. The CCO contains the IP address, the ports number, and information about the type of communication to be supported and the identification of the media server which is in charge of connecting the media stream between the virtual client and the real client (Step (4) on the Figure).
- After the negotiation step between the Web Communication Server and the real client, the Communication Handler is notified about a new connection, therefore it retrieves all the parameters needed to send and receive the media stream. The Web Communication Server sends a call request to callee user on his real world mobile terminal (Step (5) on the Figure).
- Callee user is able to accept or not the call which is identified by the avatar name (Step (6) on the Figure).
- In the case, it accepts the call, the answer is then forwarded to the avatar in the virtual world. The Media Controller module opens an RTP connection with the web media server, and starts capturing the video frames produced by the virtual rendering engine and the 3D voice engine, and then it starts building the RTP outgoing stream by adding the appropriate header to each frame (based on used codec e.g. H263 or H264). Finally the data stream is sent through the RTP transport channels (AudioNideo) (Step (7) on the Figure).
- The avatar starts streaming its own scene view, and in the same time plays the live data stream coming from the callee user (Step (8) on the Figure).
- The callee starts viewing on his terminal the avatar scene view as if it is a real person (Step (9) on the Figure).

The communication module negotiates the communication modalities to apply between a callee and a caller according to the degree of their social proximity and the communication preferences set up by the callee.

## Claims

1. A method of generalizing the users communication means in a virtual world between users, comprises the steps of:
- combining said communication means with social features for automatic selection
- combining said communication means with communications hyperlinks in order to preserve users' identity and keep an ambient identity between the virtual and the real world.
